# EUROPEAN PATENT SPECIFICATION

(11) **EP 2 505 331 B1**
(45) Date of publication and mention of the grant of the patent: **03.04.2013**
(21) Application number: 12161336.8
(22) Date of filing: 26.03.2012
(51) Int. Cl.: B29C 45/16, B29D 23/00, F16L 25/00, B29C 45/14

(54) **Method of production of a joint for corrugated pipes in plastic material with annexed sealing gasket**
Verfahren zur Herstellung eines Verbindungsstücks für gewellte Leitungen in Kunststoffmaterial mit angehängter Abdichtdichtung
Procédé de production d'un joint pour tuyaux ondulés en matériau plastique avec un joint d'étanchéité annexé

(30) Priority: 30.03.2011 IT RA20110012
(43) Date of publication of application: 03.10.2012
(73) Proprietor: IPM S.R.L., 48022 Lugo (Ravenna) (IT)
(72) Inventor: Argnani, Claudio, 48022 Lugo (Ravenna) (IT)
(74) Representative: Petruzziello, Aldo

(56) References cited:
- WO-A1-01/70480
- WO-A1-2009/036945
- DE-U1- 9 111 628
- US-A- 4 724 111

## Description

In the state of the art there is increasing use of corrugated pipes with one or two walls, above all for traditional plastic materials such as polyvinyl chloride (PVC) and the polyolefins (polyethylene and polypropylene), pipes which combine good features of resistance to the internal pressure and to the external stresses with a considerable lightness and consequently a good saving in material, compared to traditional pipes with solid wall.

Problems arise however in the forming of the "bell", the latter being the term whereby in the industry, including the relative standards, the end of the pipe shaped with external sleeve is called, which couples in the formation of the joint with the normal end, at times bevelled, of the next pipe, forming a joint which takes the name therefrom of "bell joint".

These problems, which occur in the phases of hot plastic deformation, mainly arise from the alteration of the shape of the ribbings, such as to jeopardise the function (less stiffening of the pipe), and from the presence of a plastic memory in the polyolefins, which tends to make the material return in time towards the original position.

Further problems arise from the fact that, the seal of the joint normally being made with the addition of a gasket ring in rubber in the appropriate seat obtained in the external sleeve, omission of its insertion at installation or in any case its incorrect insertion, as direction of work and as position, may occur, undermining the complete seal of the joint. This must in any case be added to the practical difficulties of the operation of introduction, above all for high diameters, because considerable manual efforts are required, and with the need to use appropriate mechanical instruments. Moreover the operation may be hindered by the accumulation of dirt in the spaces provided for the gasket itself, during the movement and the laying of the pipes.

The utility model application DE 9111628U1 describes a corrugated pipe, cut at the groove between two adjacent ridges (ribbings), whereto an external sleeve is attached by means of injection, provided with a seat for the housing of the sealing gasket.

US 4,724,111 describes a corrugated pipe wherein the external sleeve, without a seat for the gasket, is obtained by injection into an appropriate mould and incorporates the last two ridges of the deformed pipe during the creation of the sleeve. This process has nevertheless to provide a phase of expulsion of the air contained inside the ribbings in order to be able to perform the deformation illustrated without breakage of the same ribbings.

The patent application WO01/7048 describes a bell joint for the coupling of non-corrugated pipes wherein the gasket is inserted in its interior by means of injection.

The patent application W02009/036945 describes a method for introducing a gasket in a male connector by means of injection.

The object of the present invention is to eliminate, at least in part, the disadvantages of the prior art, providing a method for producing a bell joint for corrugated pipes, including a seal, dimensionally stable and without deformed ribbings, which is restrained firmly to the corrugated pipe.

Another object is that of obtaining such a method which is simple and economical to perform.

These objects are achieved by the method according to the invention having the features listed in the annexed independent claim 1, and by a bell joint as defined in claim 10.

Advantageous embodiments of the invention are disclosed by the dependent claims.

The present system or method of production proposes an improving and innovative solution: in fact on the one hand the external sleeve of the joint is produced by means of injection during the process of forming, in such a way that it can adhere to and weld with the corresponding axial edge of the pipe, whereto it is coaxial, the latter being optionally prepared previously for the purpose, for example by means of milling. A further constructional feature of the sleeve is that of containing on its inner surface the circumferential seat of the sealing gasket of the joint, which seat is therefore also obtained by injection, and is placed axially in the appropriate position, to facilitate the work of the sealing gasket, having moreover dimensions and shape appropriate to those of the gasket itself. In this way the shape of the bell remains stable and the ribbings corresponding thereto do not have the possibility of deforming and can be dimensioned according to needs.

Moreover, since the cutting of the end part of the pipe is performed on the ribbing, along any oblique or vertical plane in relation to the same, and not on the groove between two adjacent ribbings, it is possible for the sleeve to have available a larger area for welding to the underlying pipe, in particular to the innermost smooth wall of the corrugated pipe, preventing at the same time the expansion of the air trapped inside each ribbing from causing damage during the production with heat of the sleeve.

On the other hand and as subsequent advantage, the system provides for insertion by injection in its seat of the sleeve and already in work position the sealing gasket, in the appropriate shapes and materials, preferably already during the process of forming, using a same mould in relation to that of forming of the sleeve, or using different moulds. This latter solution allows the relative injection processes of the sleeve and sealing gasket respectively to be able to be performed in parallel one with the other, in order to reduce the overall times of production.

As a practical consequence the insertion and the forming of the gasket become a single process, where its housing seat in the sleeve partially performs the function of injection mould, also avoiding any subsequent movement and positioning of the same sealing gasket. To this end the housing seat, as above, in order to constitute an efficient support, has to be already formed and at least sufficiently cooled, on injection of the relative gasket. Moreover said gasket, precisely because injected in its seat, tends to adhere for a circumferential zone to the same, ensuring or facilitating its maintaining in work position, and avoiding the risk of detachments and of exiting from the seat due to the falling of some segments and due to deformation.

The process of injection of the gasket moreover allows the use of materials suitable for performing a function of sealing in a correct and optimal manner, such as various types of rubber. It moreover allows the formation of gaskets of various shapes and suitable for performing correctly the sealing function.

As regards the injection of the sleeve, the materials currently proposed are the common plastic materials, in particularly the polyolefins (polypropylene and polyethylene).

These and further features and advantages of the present invention will be made clearer by the following description of an embodiment, illustrated by way of a nonlimiting example.

In the above description only the components of the product of the process are indicated, i.e. the bell joint. There is instead no indication of the specific procedures of the same process, the tools used, the reciprocal positionings of the work processes constituting the overall process, in particular of those constituting the two phases foreseen of injection, of the sleeve and of the sealing gasket respectively, and of preparation of the end of the pipe, whereon the phase of injection of the sleeve is performed: this is because all these phases and work processes, taken singularly, belong to the prior art of the sector, while their functional sequence foreseen in the present process is instead innovative.

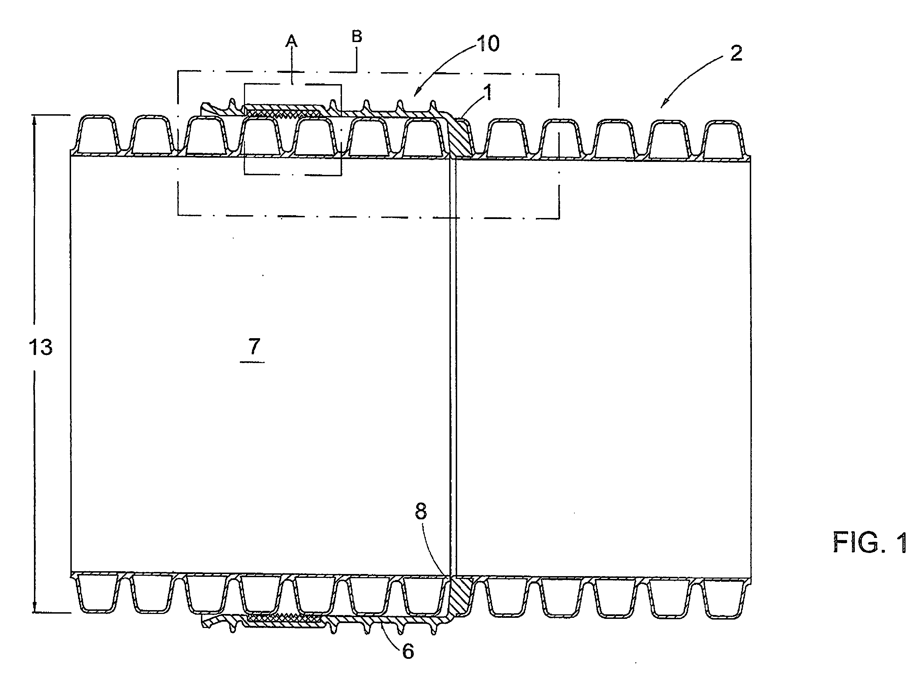

Fig. 1 represents an overall axial section of the bell joint of a corrugated pipe with double wall, made according to the principles of the present invention.
Fig. 2 represents an enlargement of Fig. 1, corresponding in particular to the zone of the sealing gasket denoted by A in Fig. 1.
Fig. 3 shows a partial axial section relating to only the external part of the joint, shaped with external sleeve, comprising also its sealing gasket corresponding to the detail denoted by B in Fig. 1.
Fig. 4 is an exploded view of the welding zone illustrated in Fig. 3.

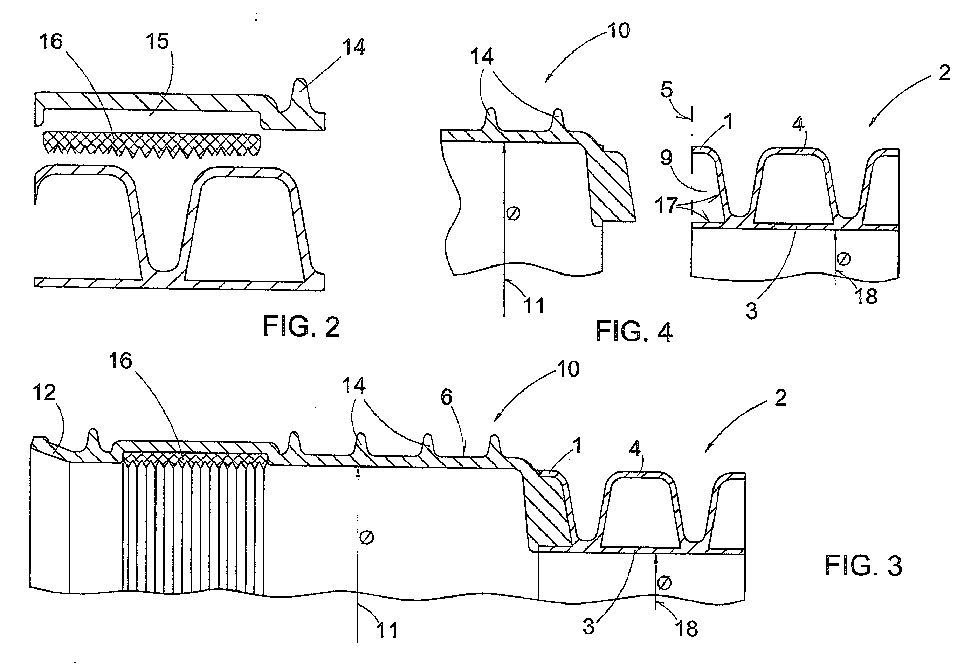

In the first part of the process the end edge 1 of the double-walled pipe 2 is prepared, with adequate operation of shaping, for example of the plastic type or preferably with chip removal (cutting and/or milling), in order to render adequate this end for subsequent coupling with heat with the injected external sleeve: in Fig. 3 both the inner wall 3 and the outer one 4 of the pipe are cut approximately at the transverse median plane 5 of a same ribbing. There are however other solutions, which provide for cuts in different positions of the ribbings and which can offer equally efficient solutions,

The cutting of the two walls, inner 3 and outer 4, of a ribbing of the corrugated pipe 2, so as to form a cavity 9 suitable for constituting a continuity of material between the existing pipe 2 and the future sleeve, is in any case such as to increase the surface of contact between the cut end of the pipe and the sleeve which is to be injected.

In the second phase of the process a sleeve 10 in plastic material is injected, identical or compatible with that of the pipe 2, so that it is coaxial with the pipe itself, which is welded with it at the end 1 and which has adequate shapes and dimensions for constituting the female external part 6 of the bell joint 7, whereof the second internal part 8 is constituted by the normal end of the coupled pipe.
The operation of injection makes use of an appropriate mould, not shown in the drawing in that belonging to the prior art and in that it can be made with several constructional variants, whereon the end 1 of the pipe 2 is inserted on one side, so that the injected material fills in a homogeneous manner the cavity 9 constituted by the half of the ribbing having axis 5, previously shaped, to constitute, by means of the welding process, a material continuity between the existing pipe 2 and the sleeve 10 during the phase of injection.

The aforementioned shapes and dimensions, appropriate for constituting the external part 6 of the bell joint 7, require among other things that the inside diameter 11 of the sleeve be slightly greater, of the amount required as functional backlash, than the outside diameter 13 of the pipe, that its cylindrical length be appropriate for the good functioning of the joint as such, that the axial end 12 be preferably conical, to aid the entering of a subsequent pipe in coupling, that the sleeve be stiffened by a series of circumferential external ribbings 14, so that its rigidity is compatible with that of the normal pipe. They require finally the obtaining on the inner cylindrical surface of the sleeve, of diameter 11, in an adequate axial position, of an annular seat 15 suitable, by shape and dimension, for containing the sealing gasket 16, also during work with the joint mounted. All the aforementioned features being obtainable in the injection phase foreseen.

In the third and final phase of the present process the sealing gasket 16, already located in its normal work position and having adequate shape and dimensions for performing the specific function and made in suitable elastic material, is injected in the seat 15, as above.

The aforesaid injection uses in any case for a first part as mould the same seat 15 of the sleeve 10, already sufficiently cooled, and for a second part an appropriate mould, which allows completion of the geometry of the same sealing gasket and which is not shown in the drawing in that belonging to the prior art,

This mould can be the same with which the injection of the sleeve was performed, although using for the two operations, even only partially, different parts of the mould, with an appropriate sequence of the relative movements; or another mould, wherein the article is transported, for example to speed up the performance of the operation, it being possible in this way to exploit the simultaneous nature of the work processes. Moreover it is possible for the injection of the sleeve and the injection of the gasket to use only partially the same mould, it having been in any case verified that the two phases are successive in time and that the injection of the gasket is performed inside the appropriate seat of the sleeve. All the solutions mentioned therefore come within the inventive form in question.

Finally, with an appropriate configuration of the mould of injection of the sleeve 10, it is possible to make sure that the welding zone 17 between the same injected sleeve 10 and the shaped end 1 of the pipe 2 is formed precisely at the union between the inside diameter 18 of the pipe and the inside diameter 11 of the bell joint, creating a favourable geometric shape from the point of view of the resistance and of the use of the materials.

## Claims

1. Method of production of a bell joint (7) for corrugated pipes (2) in plastic material, having an inner wall (3) and an outer wall (4), comprising the following operations, in order of time:
shaping of the end (1) of a pipe (2) intended for the coupling with an external sleeve (10),
injection of said sleeve (10), mainly cylindrical and positioned in a coaxial direction with respect to the pipe itself, the sleeve welding during the operation with the shaped end (1) of the pipe (2); said sleeve (10) comprising, moreover, in an appropriate zone of its inner surface, an annular seat (15) suitable for containing a sealing gasket (16), said annular seat being obtained during said phase of injection
injection of said sealing gasket (16) in the aforementioned seat (15) of the sleeve (10), in work position, wherein
the pipe end (1), which is coupled by welding with the sleeve (10), is shaped by cutting the two walls, inner (3) and outer (4), of a ribbing of the corrugated pipe (2), so as to form a cavity (9) which constitutes a continuity of material between the existing pipe (2) and the sleeve (10) during injection.

2. Method of production according to claim 1, wherein the injection of the sealing gasket (16) takes place in the appropriate seat (15) of the sleeve (10), when this seat is already formed and at least sufficiently cooled, at the end of its injection process.

3. Method of production according to claims 1 or 2, wherein pipe end (1), which is coupled by welding with the sleeve (10), is shaped by cutting of the two walls, inner (3) and outer (4), of the corrugated pipe, at the transverse median plane (5) of a same ribbing.

4. Method of production according to any one of the previous claims, wherein the inside diameter (11) of the sleeve (10) is slightly greater than the outside one (13) of the corrugated pipe so as to create an appropriate functional backlash between the two parts.

5. Method of production according to any one of the previous claims, wherein a single mould is used for performing both the injections, of the sleeve (10) and of the sealing gasket (16), with an appropriate sequence of internal movements.

6. Method of production according to any one of claims 1 to 4, wherein the phases of injection, of the sleeve (10) and of the sealing gasket (16), use respectively moulds that are different one from the other.

7. Method of production according to any one of the previous claims, wherein the injected sleeve (10) has a series of external circumferential ribbings (14) for strengthening, which are also obtained by injection.

8. Method of production according to any one of the previous claims, wherein the injected sleeve (10) has a conical mouth (12) at the free end, also obtained by injection.

9. Method of production according to any one of the previous claims, wherein the welding zone (17) between the injected sleeve (10) and the shaped end (1) of the pipe is formed at the union between the inside diameter (18) of the pipe and the inside diameter (11) of the bell joint.

10. Bell joint (7) for corrugated pipes (2) in plastic material obtained by means of the method as defined in any one of the previous claims 1-9, said bell joint being formed by an external sleeve (10), mainly cylindrical and positioned in a coaxial direction with a corrugated pipe (2), comprising an annular seat (15) wherein an injected sealing gasket (16) is housed, in work position, wherby the end (1) of said corrugated pipe (2) is shaped by cutting of the two walls, inner (3) and outer (4), of a ribbing of the corrugated pipe (2) so as to form a cavity (9) which is coupled with the sleeve (10) by welding by means of injection so as to constitute a continuity of material between said pipe and said sleeve.

## Patentansprüche

1. Verfahren zur Herstellung eines Muffenverbindungsstücks (7) für gewellte Leitungen (2) in Kunststoffmaterial, mit einer Innenwand (3) und einer Außenwand (4), in zeitlicher Reihenfolge folgende Vorgänge umfassend:
Formen des Endes (1) einer Leitung (2), die zum Verkuppeln mit einer äußeren Hülse (10) bestimmt ist,
Einspritzen der Hülse (10), hauptsächlich zylindrisch und in einer koaxialen Richtung bezüglich der Leitung selbst positioniert, wobei die Hülse während des Vorgangs mit dem geformten Ende (1) der Leitung (2) verschweißt; wobei die Hülse (10) zudem in einem zweckdienlichen Bereich ihrer Innenfläche einen ringförmigen Sitz (15) umfasst, der zum Enthalten eines Dichtungsrings (16) geeignet ist, wobei der ringförmige Sitz während der Phase des Einspritzens erzielt wird;
Einspritzen des Dichtungsrings (16) in dem oben angegebenen Sitz (15) der Hülse (10) in Arbeitsposition, wobei
das Leitungsende (1), das durch Verschweißen mit der Hülse (10) verkuppelt ist, durch Schneiden der zwei Wände, der inneren (3) und der äußeren (4), aus einer Verrippung der gewellten Leitung (2) zum Ausbilden eines Hohlraums (9) geformt wird, welcher einen Materialverlauf zwischen der bestehenden Leitung (2) und der Hülse (10) während des Einspritzens bildet.

2. Verfahren zur Herstellung nach Anspruch 1, wobei das Einspritzen des Dichtungsrings (16) in dem zweckdienlichen Sitz (15) der Hülse (10) stattfindet, wenn dieser Sitz bereits ausgebildet und am Ende des Einspritzvorgangs zumindest genügend abgekühlt ist.

3. Verfahren zur Herstellung nach einem der Ansprüche 1 oder 2, wobei das Leitungsende (1), das durch Verschweißen mit der Hülse (10) verkuppelt ist, durch Schneiden der zwei Wände, der inneren (3) und der äußeren (4), der gewellten Leitung an der quer verlaufenden, mittleren Ebene (5) einer gleichen Verrippung geformt wird.

4. Verfahren zur Herstellung nach einem der vorhergehenden Ansprüche, wobei der Innendurchmesser (11) der Hülse (10) geringfügig größer als der Außendurchmesser (13) der gewellten Leitung ist, um ein zweckdienliches funktionelles Spiel zwischen den zwei Teilen zu schaffen.

5. Verfahren zur Herstellung nach einem der vorhergehenden Ansprüche, wobei eine einzige Form zum Durchführen beider Einspritzungen, der der Hülse (10) und der des Dichtungsrings (16) mit einer zweckdienlichen Abfolge innerer Bewegungen benutzt wird.

6. Verfahren zur Herstellung nach einem der Ansprüche 1 bis 4, wobei die Einspritzphasen der Hülse (10) und des Dichtungsrings (16) jeweils Formen nutzen, die voneinander abweichen.

7. Verfahren zur Herstellung nach einem der vorhergehenden Ansprüche, wobei die gespritzte Hülse (10) eine Reihe äußerer, umfänglicher Verrippungen (14) zur Verstärkung aufweist, die ebenfalls durch Einspritzen erzielt werden.

8. Verfahren zur Herstellung nach einem der vorhergehenden Ansprüche, wobei die gespritzte Hülse (10) eine konische Mündung (12) am freien Ende aufweist, die ebenfalls durch Einspritzen erzielt wird.

9. Verfahren zur Herstellung nach einem der vorhergehenden Ansprüche, wobei der Schweißbereich (17) zwischen der gespritzten Hülse (10) und dem geformten Ende (1) der Leitung an der Verbindungsstelle zwischen dem Innendurchmesser (18) der Leitung und dem Innendurchmesser (11) des Muffenverbindungsstücks ausgebildet wird.

10. Muffenverbindungsstück (7) für gewellte Leitungen (2) in Kunststoffmaterial, erzielt mithilfe des Verfahrens wie in einem der vorhergehenden Ansprüche 1 bis 9 definiert, wobei das Muffenverbindungsstück durch eine äußere Hülse (10), hauptsächlich zylindrisch und in einer koaxialen Richtung bezüglich einer gewellten Leitung (2) positioniert, ausgebildet ist, umfassend einen ringförmigen Sitz (15), in dem ein gespritzter Dichtungsring (16) untergebracht ist, in Arbeitsposition, wobei das Ende (1) der gewellten Leitung (2) durch Schneiden der zwei Wände, der inneren (3) und der äußeren (4), aus einer Verrippung der gewellten Leitung (2) zum Ausbilden eines Hohlraums (9) geformt ist, welcher mit der Hülse (10) durch Verschweißen mithilfe von Einspritzen zum Bilden eines Materialverlaufs zwischen der Leitung und der Hülse verkuppelt ist.

## Revendications

1. Procédé de production d'un joint à godet (7) pour tuyaux ondulés (2) en matériau plastique comportant une paroi intérieure (3) et une paroi extérieure (4), comprenant les opérations suivantes classées dans l'ordre chronologique :
façonnage du bout (1) d'un tuyau (2) destiné à être couplé à un manchon extérieur (10),
injection dudit manchon (10), principalement cylindrique et positionné dans un sens coaxial par rapport au tuyau lui-même, le manchon se soudant pendant l'opération au bout façonné (1) du tuyau (2) ; ledit manchon (10) comprenant en outre, dans une zone appropriée de sa surface intérieure, un siège annulaire (15) apte à contenir un joint d'étanchéité (16), ledit siège annulaire étant obtenu pendant ladite phase d'injection ;
injection dudit joint d'étanchéité (16) dans le siège susmentionné (15) du manchon (10), en position opérationnelle, sachant que
le bout du tuyau (1) qui est couplé par soudage au manchon (10) est façonné en coupant les deux parois intérieure (3) et extérieure (4) d'une nervure du tuyau ondulé (2) de manière à former une cavité (9), ce qui constitue une continuité de matériau entre le tuyau existant (2) et le manchon (10) pendant l'injection.

2. Procédé de production selon la revendication 1, dans lequel l'injection du joint d'étanchéité (16) a lieu dans le siège approprié (15) du manchon (10) lorsque ce siège est déjà façonné et au moins suffisamment refroidi à la fin de son processus d'injection.

3. Procédé de production selon la revendication 1 ou 2, dans lequel le bout du tuyau (1) qui est couplé par soudage au manchon (10) est façonné en le découpant dans les deux parois intérieure (3) et extérieure (4) du tuyau ondulé au niveau du plan médian transversal (5) d'une même nervure.

4. Procédé de production selon l'une quelconque des revendications précédentes, dans lequel le diamètre intérieur (11) du manchon (10) est légèrement supérieur au diamètre extérieur (13) du tuyau ondulé de manière à créer un jeu fonctionnel approprié entre les deux pièces.

5. Procédé de production selon l'une quelconque des revendications précédentes, dans lequel un seul moule est utilisé pour réaliser à la fois l'injection du manchon (10) et du joint d'étanchéité (16) par une séquence appropriée de mouvements internes.

6. Procédé de production selon l'une quelconque des revendications 1 à 4, dans lequel on utilise respectivement pour les phases d'injection du manchon (10) et du joint d'étanchéité (16) des moules différents les uns des autres.

7. Procédé de production selon l'une quelconque des revendications précédentes, dans lequel le manchon injecté (10) a une série de nervures circonférentielles extérieures (14) de renfort qui sont aussi obtenues par injection.

8. Procédé de production selon l'une quelconque des revendications précédentes, dans lequel le manchon injecté (10) a une embouchure conique (12) à son bout libre, qui est également obtenue par injection.

9. Procédé de production selon l'une quelconque des revendications précédentes, dans lequel la zone de soudure (17) entre le manchon injecté (10) et le bout façonné (1) du tuyau est formée à la jonction entre le diamètre intérieur (18) du tuyau et le diamètre intérieur (11) du joint à godet.

10. Joint à godet (7) pour tuyaux ondulés (2) en matériau plastique obtenu au moyen du procédé selon l'une quelconque des revendications précédentes 1 à 9, ledit joint à godet étant formé d'un manchon extérieur (10) principalement cylindrique et positionné dans un sens coaxial avec un tuyau ondulé (2), comprenant un siège annulaire (15) dans lequel est logé, en position opérationnelle, un joint d'étanchéité injecté (16), le bout (1) dudit tuyau ondulé (2) étant façonné en coupant les deux parois intérieure (3) et extérieure (4) d'une nervure du tuyau ondulé (2) de manière à former une cavité (9) qui est couplée au manchon (10) par soudage au moyen d'une injection de manière à constituer une continuité de matériau entre ledit tuyau et ledit manchon.
